# EUROPÄISCHE PATENTSCHRIFT

(11) **EP 2 013 581 B1**
(45) Veröffentlichungstag und Bekanntmachung des Hinweises auf die Patenterteilung: **23.09.2009**
(21) Anmeldenummer: 07728238.2
(22) Anmeldetag: 18.04.2007
(51) Int. Cl.: G01C 21/34

(54) **VERFAHREN UND VORRICHTUNG ZUR PLANUNG EINER ROUTE**
METHOD AND DEVICE FOR PLANNING A ROUTE
PROCÉDÉ ET DISPOSITIF POUR PLANIFIER UN ITINÉRAIRE

(30) Priorität: 24.04.2006 DE 102006018879
(43) Veröffentlichungstag der Anmeldung: 14.01.2009
(73) Patentinhaber: Continental Automotive GmbH, 30165 Hannover (DE)
(72) Erfinder: PFEIFLE, Martin, 93142 Maxhütte-Haidhof (DE); SASSE, Volker, 93138 Lappersdorf (DE); TANTZ, Uwe, 93152 Nittendorf (DE)
(86) Internationale Anmeldenummer: PCT/EP2007/053776
(87) Internationale Veröffentlichungsnummer: WO 2007/122157

(56) Entgegenhaltungen:
- EP-A1- 0 504 854
- EP-A2- 0 372 840

## Beschreibung

Die Erfindung betrifft ein Verfahren und eine Vorrichtung zum Ermitteln von Mindestkosten von einem Startort zu einem Zielort für eine Planung einer Route von dem Startort zu dem Zielort. Abhängig von dem Startort wird ein Startknoten ermittelt und abhängig von dem Zielort wird ein Zielknoten ermittelt.

Aus der US 2002/0059025 A1 ist ein Verfahren bekannt, um in einem Verkehrsnetzwerk einen kürzesten Weg von einem Startort zu einem Zielort zu finden. Dabei werden ein Dijkstra- und ein Floyd-Marshal-Algorithmus verwendet.

Aus der EP 504 854 A1 ist ein Verfahren zum Aussuchen einer Route bekannt. Die Route wird dadurch erhalten, dass eine erste Route von einem Startpunkt zu einem ersten Routenspeicherpunkt gesucht wird, der in einem Zwischenpunktspeicher gespeichert ist. Dann wird eine zweite Route von einem Zielort zu einem zweiten Routenspeicherpunkt gesucht, der in dem Zwischenpunktspeicher gespeichert ist. Zwischen dem ersten Routenspeicherpunkt und dem zweiten Routenspeicherpunkt wird eine dritte Route ermittelt. Dann werden die erste, die zweite und die dritte Route zu einer Gesamtroute verbunden.

Aus der EP 372 840 A2 ist ein adaptives Routenführungssystem für ein Fahrzeug bekannt. Das Navigationssystem umfasst eine Kartenspeichereinheit, eine Positionsbestimmungseinheit und eine Routenberechnungseinheit. In der Kartenspeichereinheit sind Gebäude und Straßendaten abgespeichert, die Knoten und Verbindungen umfassen. Die Routenberechnungseinheit liest die Straßendaten, die die aktuelle Position und die einen Zielort umfassen.

Es ist Aufgabe der Erfindung, ein Verfahren und eine Vorrichtung zu schaffen, das bzw. die einfach eine effektive Routenplanung ermöglicht.

Die Aufgabe wird gelöst durch die Merkmale der unabhängigen Ansprüche. Vorteilhafte Ausgestaltungen der Erfindung sind in den abhängigen Ansprüchen gekennzeichnet.

Die Erfindung zeichnet sich aus durch ein Verfahren und eine Vorrichtung zum Ermitteln von Mindestkosten zwischen einem Startort und einem Zielort anhand einer vorgegebenen Landkarte, die in vorgegebene Landkartenausschnitte unterteilt ist. Die Mindestkosten werden ermittelt für eine Planung einer Route von dem Startort zu dem Zielort. Abhängig von dem Startort wird ein Startknoten ermittelt. Der Startknoten repräsentiert einen Übergang von einem der vorgegebenen Landkartenausschnitte der Landkarte zu einem anderen der vorgegebenen Landkartenausschnitte der Landkarte. Dem Startknoten sind Startknotenkosten zu zumindest einer vorgegebenen Startlandkartenmarkierung aus einer vorgegebenen Menge an Startlandkartenmarkierungen zugeordnet. Die Menge an Startlandkartenmarkierungen umfasst eine vorgegebene erste Anzahl der zu dem Startknoten nächstliegenden Landkartenmarkierungen. Die vorgegebene erste Anzahl ist kleiner als die Gesamtanzahl aller Landkartenmarkierungen. Abhängig von dem Startknoten werden die entsprechenden Startknotenkosten zu jeder Startlandkartenmarkierung ermittelt. Abhängig von dem Zielort wird ein Zielknoten ermittelt. Der Zielknoten repräsentiert einen Übergang von einem der vorgegebenen Landkartenausschnitte der Landkarte zu einem anderen der vorgegebenen Landkartenausschnitte der Landkarte. Dem Zielknoten sind zumindest Zielknotenkosten von dem Zielknoten zu zumindest einer vorgegebnen Ziellandkartenmarkierung aus einer vorgegebenen Menge an Ziellandkartenmarkierungen zugeordnet. Die Menge an Ziellandkartenmarkierungen umfasst eine vorgegebene zweite Anzahl der zu dem Zielknoten nächstliegenden Landkartenmarkierungen. Die vorgegebene zweite Anzahl ist kleiner als die Gesamtanzahl aller Landkartenmarkierungen. Abhängig von dem Zielknoten werden die entsprechenden Zielknotenkosten zu jeder Ziellandkartenmarkierung ermittelt. Landkartenmarkierungskosten von jeder Startlandkartenmarkierung zu jeder Ziellandkartenmarkierung werden ermittelt anhand einer Tabelle, die die Landkartenmarkierungskosten aller Landkartenmarkierungen zueinander umfasst. Die Mindestkosten werden abhängig von den ermittelten Startknotenkosten, den ermittelten Zielknotenkosten und den ermittelten Landkartenmarkierungskosten ermittelt.

Gegenüber einem Verfahren, bei dem jedem Knoten die Kosten bis zu allen Landkartenmarkierungen zugeordnet sind, ermöglicht dies, die benötigte Datenmenge zum Ermitteln der Mindestkosten stark zu reduzieren und damit so viel Speicherplatz zu sparen, dass das Verfahren ausschließlich auf einem mobilen Gerät zur Planung der Route durchgeführt werden kann. Das Ermitteln der Mindestkosten ermöglicht, den Suchraum bei der Suche nach der Route stark einzuschränken, und trägt somit zu einem schnellen Ermitteln der Route bei. Insbesondere eine erste Richtungsausgabe des mobilen Geräts zum Planen der Route nach einer Eingabe eines Benutzers des Geräts kann sehr schnell ausgegeben werden. Falls die Landkartenausschnitte auf einem Speichermedium eines Geräts zum Ermitteln der Route jeweils in zusammenhängenden Speicherbereichen abgelegt sind, so ermöglicht das Zuordnen der Knotenkosten zu den Knoten, die die Übergänge repräsentieren, zum Planen der Route für je einen Startort und je einen Zielort lediglich zwei Landkartenausschnitte laden zu müssen. Dies trägt zu einem sehr schnellen Ermitteln der Mindestkosten bei.

In einer vorteilhaften Ausgestaltung des Verfahrens werden die Mindestkosten anhand der vorgegebenen Landkarte ermittelt. Die vorgegebene Landkarte ist in die vorgegebenen Landkartenausschnitte unterteilt. Für einen der Landkartenausschnitte, der einen ausgezeichneten Startort und/oder Zielort umfasst, wird zumindest eine Zusatzinformation vorgegeben gegenüber einem der Landkartenausschnitte, der keinen ausgezeichneten Startort bzw. Zielort umfasst. Dies kann in den Fällen, in denen der Startort und/oder der Zielort den ausgezeichneten Startorten bzw. Zielorten entsprechen, dazu beitragen, dass die Route besonders schnell geplant werden kann.

In einer weiteren vorteilhaften Ausgestaltung des Verfahrens wird als Zusatzinformation zumindest eine zusätzliche Landkartenmarkierung vorgegeben. Dies kann dazu beitragen, die Route besonders schnell zu planen.

In einer weiteren vorteilhaften Ausgestaltung des Verfahrens wird als Zusatzinformation eine der Landkartenmarkierungen so vorgegeben, dass sie dem ausgezeichneten Startort und/oder Zielort entspricht. Dies kann dazu beitragen, die Route besonders schnell zu planen, falls der Startort und/oder der Zielort den ausgezeichneten Startorten bzw. Zielorten entsprechen.

In einer weiteren vorteilhaften Ausgestaltung des Verfahrens werden räumliche und/oder zeitliche Kosten der Knoten zu den Landkartenmarkierungen und/oder der Landkartenmarkierungen zueinander vorgegeben. Die räumlichen Kosten repräsentieren räumliche Abstände zwischen den Knoten und den Landkartenmarkierungen bzw. zwischen den Landkartenmarkierungen zueinander. Die zeitlichen Kosten repräsentieren eine durchschnittliche Fahrdauer von einem der Knoten zu einem anderen der Knoten bzw. von einer der Landkartenmarkierungen zu einer anderen der Landkartenmarkierungen. Dies ermöglicht, dynamische Verkehrsbedingungen, wie Staus, Baustellen und/oder Pendelverkehr, und/oder Geschwindigkeitsbegrenzungen und/oder Mautgebühren bei der Planung der Route zu berücksichtigen.

In einer weiteren vorteilhaften Ausgestaltung des Verfahrens werden die zeitlichen und/oder räumlichen Kosten gewichtet abhängig von einem Benutzerwunsch. Die Route und/oder die Mindestkosten werden abhängig von den gewichteten Kosten ermittelt. Dies ermöglicht, dass der Benutzer von Route zu Route selbst entscheiden kann, wie wichtig ihm Geschwindigkeit, Zeit und/oder die Streckenlänge bei der Planung der Route sind.

Die vorteilhaften Ausgestaltungen des Verfahrens können ohne weiteres auf vorteilhafte Ausgestaltungen der Vorrichtung übertragen werden.

Die Erfindung ist im Folgenden anhand von schematischen Zeichnungen näher erläutert. Es zeigen:
- Figur 1: eine erste Ansicht einer Landkarte,
- Figur 2: eine Tabelle mit Landkartenmarkierungskosten,
- Figur 3: eine zweite Ansicht der Landkarte mit Landkartenausschnitten,
- Figur 4: eine dritte Ansicht der Landkarte mit weiteren Landkartenausschnitten,
- Figur 5: ein Ablaufdiagramm zum Ermitteln von Mindestkosten,
- Figur 6: eine Berechnungsvorschrift zum Gewichten von Kosten.

Elemente gleicher Konstruktion oder Funktion sind figurenübergreifend mit den gleichen Bezugszeichen gekennzeichnet.

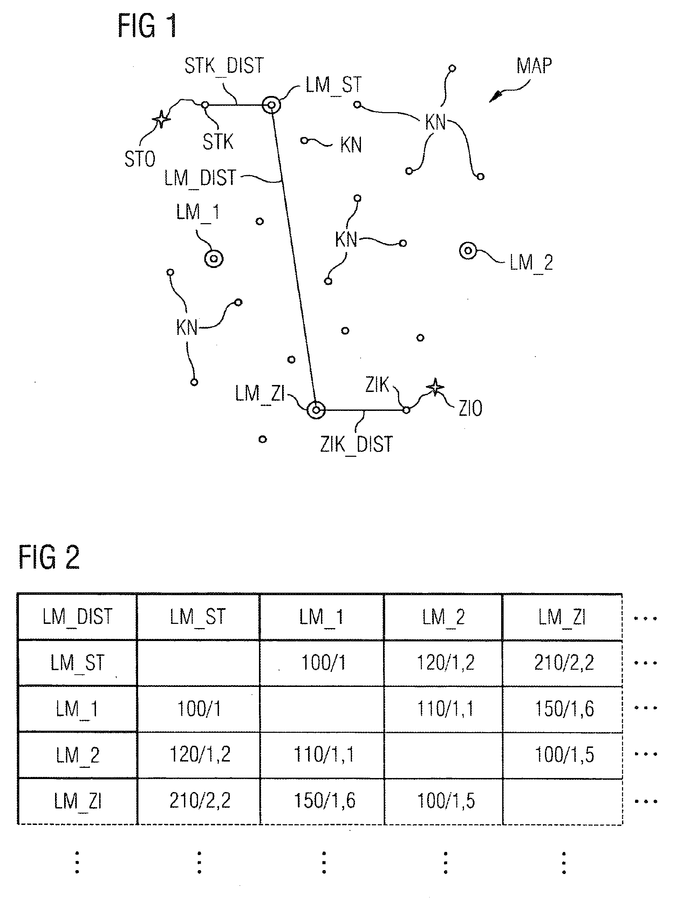

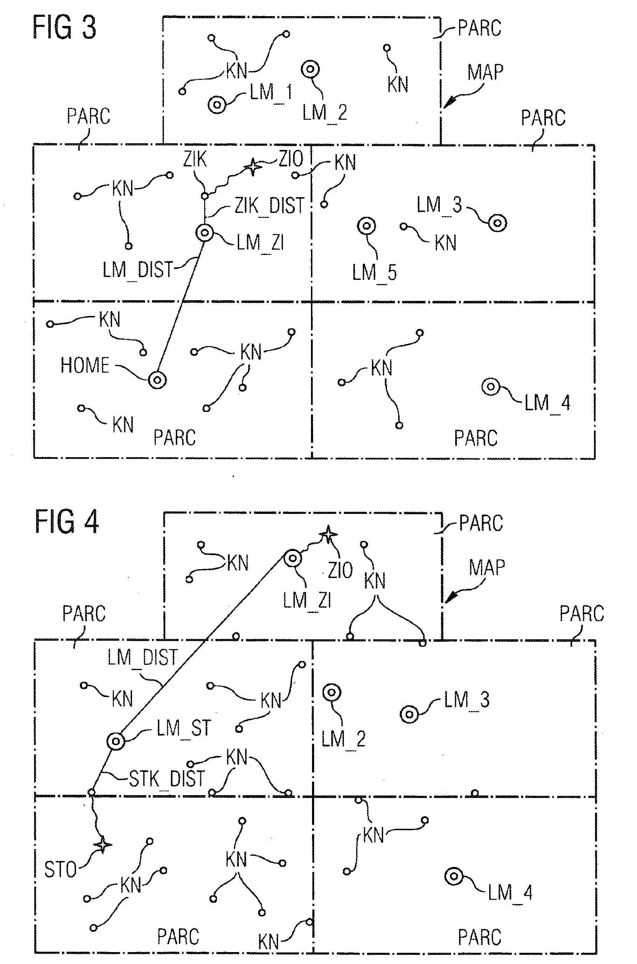

Eine Landkarte MAP (Figur 1) umfasst Knoten KN, Landkartenmarkierungen und mindestens einen Startort STO und mindestens einen Zielort ZIO. Jeder der Knoten KN ist vorzugsweise repräsentativ für eine Straßenkreuzung. Die Landkartenmarkierungen umfassen zumindest eine Ziellandkartenmarkierung LM_ZI und zumindest eine Startlandkartenmarkierung LM_ST, erste bis fünfte Landkartenmarkierungen LM_1-LM_5 (siehe Figur 3) und vorzugsweise zumindest eine ausgezeichnete Landkartenmarkierung HOME (siehe Figur 3). Die Knoten KN umfassen zumindest einen Startknoten STK und einen Zielknoten ZIK. Der Startknoten STK repräsentiert den nächstliegenden Knoten KN zu dem Startort STO. Der Startknoten STK weist Startknotenkosten STK_KOST zu der Startlandkartenmarkierung LM_ST auf. Der Zielknoten ZIK repräsentiert den nächstliegenden Knoten KN zu dem Zielort ZIO. Der Zielknoten ZIK weist Zielknotenkosten ZIK_KOST zu der Ziellandkartenmarkierung LM_ZI auf. Die Startlandkartenmarkierung LM_ST und die Ziellandkartenmarkierung LM_ZI weisen Landkartenmarkierungskosten LM_KOST zueinander auf.

Die Kosten umfassen Knotenkosten und die Landkartenmarkierungskosten LM_KOST. Die Knotenkosten umfassen die Startknotenkosten STK_KOST, die Zielknotenkosten ZI_KOST und weitere Knotenkosten von einem der Knoten KN zu einem anderen der Knoten KN. Die Kosten sind beispielsweise repräsentativ für räumliche Abstände zwischen den Knoten und den Landkartenmarkierungen, für räumliche Abstände zwischen den Landkartenmarkierungen untereinander, für Fahrdauern DUR die durchschnittlich benötigt werden um die räumlichen Abstände zurückzulegen, für Geschwindigkeitsbegrenzungen und/oder für Mautstellen.

Jedem Knoten KN sind die Knotenkosten zu einer vorgegebenen Anzahl an nächstliegenden Landkartenmarkierungen zugeordnet. Zugeordnet kann in diesen Zusammenhang beispielsweise bedeuten, dass auf einem Speichermedium, auf dem die Landkarte MAP gespeichert ist, jeweils einer der Knoten KN und die entsprechenden Knotenkosten in einem zusammenhängenden Speicherbereich abgespeichert sind. Dies ist besonders vorteilhaft, da bei einem Laden des Knotens KN zum Ermitteln einer Route und/oder von Mindestkosten MIN_KOST, die für die Route benötigt werden, dann automatisch auch die entsprechenden Knotenkosten geladen werden. Somit wird zum Ermitteln der Knotenkosten keine zusätzliche Zeit benötigt. Die vorgegebene Anzahl an Landkartenmarkierungen ist vorzugsweise weitaus kleiner als die Gesamtzahl aller Landkartenmarkierungen. Beispielsweise kann die Anzahl der nächstliegenden Landkartenmarkierungen einem Prozent aller Landkartenmarkierungen entsprechen. Die Anzahl an nächstliegenden Landkartenmarkierungen kann von Knoten KN zu Knoten KN variieren, sie kann aber auch für alle Knoten KN fest vorgegeben sein.

Die Landkartenmarkierungskosten LM_KOST aller Landkartenmarkierungen zueinander sind bevorzugt in einer Tabelle (Figur 2) hinterlegt. Die Tabelle ist vorzugsweise auf dem Speichermedium gespeichert. Beispielsweise sind die Kosten zwischen der Startlandkartenmarkierung LM_ST und der ersten Landkartenmarkierung LM_1 für ein Fahrzeug im Durchschnitt hundert Kilometer und eine Stunde. Das heißt, das Fahrzeug legt die hundert Kilometer zwischen der Startlandkartenmarkierung LM_ST und der ersten Landkartenmarkierung LM_1 durchschnittlich in einer Stunde zurück. Die Tabelle muss nicht symmetrisch sein. Das heißt in diesem Zusammenhang, dass beispielsweise von dem Startknoten STK zu der Startknotenmarkierung LM_ST andere Startknotenkosten anfallen als von der Startknotenmarkierung LM_ST hin zu dem Startknoten STK. Dies kann beispielsweise durch eine Einbahnstraße entlang der Route hervorgerufen werden. Ferner können alle Kosten abhängig von der Richtung sein, in der die Route durchfahren wird.

Vorzugsweise ist die Landkarte MAP in Landkartenausschnitte PARC unterteilt (Figur 3). Vorzugsweise ist jeder der Landkartenartenausschnitte PARC als zusammenhängendes Datenpaket, beispielsweise als binary large object (BLOB), in einem zusammenhängenden Speicherbereich des Speichermediums gespeichert.

Bevorzugt wird zumindest ein ausgezeichneter Start- und/oder Zielort vorgegeben. Vorzugsweise entspricht der ausgezeichnete Start- bzw. Zielort einem Start- bzw. Zielort STO, ZIO, den ein Benutzer eines Geräts zum Planen der Route häufig auswählt. Dem ausgezeichneten Start- bzw. Zielort wird dann vorzugsweise die ausgezeichnete Landkartenmarkierung HOME zugeteilt. Die Landkartenmarkierungskosten LM_KOST der ausgezeichneten Landkartenmarkierung HOME zu den anderen Landkartenmarkierungen werden dann in der Tabelle der Landkartenmarkierungskosten LM_KOST abgespeichert. Bei einer Routenplanung ausgehend von bzw. ankommend an der ausgezeichneten Landkartenmarkierung HOME können dann die Mindestkosten MIN_DIST und/oder die Route sehr schnell berechnet werden, da kein Startknoten STK bzw. Zielknoten ZIK ermittelt werden muss. Insbesondere erübrigt sich dadurch das Ermitteln der Startknotenkosten STK_KOST bzw. der Zielknotenkosten ZIK_KOST. Die ausgezeichnete Landkartenmarkierung HOME kann beispielsweise repräsentativ sein für einen Arbeitsplatz des Benutzers, für einen Wohnort und/oder beispielsweise eine beliebte Freizeitanlage des Benutzers.

Das Versehen des ausgezeichneten Start- und/oder Zielorts STO, ZIO mit der ausgezeichneten Landkartenmarkierung HOME kann als eigenständiger Aspekt der Erfindung gesehen werden. Falls der Startort STO oder der Zielort ZIO der ausgezeichneten Landkartenmarkierung HOME entspricht und falls jedem Knoten KN die Knotenkosten zu allen Landkartenmarkierungen zugeordnet sind, müssen dann zum Ermitteln der Mindestkosten MIN_KOST lediglich die Zielknotenkosten ZIK_KOST bzw. die Startknotenkosten STK_KOST ermittelten werden. Falls der Startort STO oder der Zielort ZIO der ausgezeichneten Landkartenmarkierung HOME entspricht und falls jedem Knoten KN lediglich die Knotenkosten zu den nächstliegenden Landkartenmarkierungen zugeordnet sind, müssen dann zum Ermitteln der Mindestkosten MIN_KOST lediglich die Zielknotenkosten ZIK_KOST bzw. die Startknotenkosten STK_KOST und der Landkartenmarkierungsabstand LM_KOST von der Ziellandkartenmarkierung LM_ST zu der ausgezeichneten Landkartenmarkierung HOME anhand der Tabelle der Landkartenmarkierungskosten LM_KOST ermittelt werden.

Alternativ oder zusätzlich können lediglich den Knoten KN Knotenkosten bis zu den nächstliegenden Landkartenmarkierungen zugeordnet werden, die einen Übergang von einem Landkartenausschnitt PARC zu einem anderen Landkartenausschnitt PARC repräsentieren. Beispielsweise können die Knoten KN, die die Übergänge repräsentieren, auf oder direkt an den Rändern des entsprechenden Landkartenausschnitts PARC liegen (Figur 4). Falls sich die Landkartenausschnitte PARC überlappen, können beispielsweise die Knoten KN die Übergänge repräsentieren, die in dem Überlappungsbereich der Landkartenausschnitte PARC liegen. Zum Ermitteln der Route müssen dann lediglich ein Startlandkartenausschnitt und ein Ziellandkartenausschnitt aus den Landkartenausschnitten PARC ermittelt werden, die den Startort STO bzw. den Zielort ZIO umfassen. Die ermittelten Landkartenausschnitte PARC müssen dann geladen werden. Zusammen mit dem Startlandkartenausschnitt wird auch der Startknoten STK geladen, der auf dem Rand des Startlandkartenausschnitts PARC liegt. Mit dem Startknoten STK werden vorzugsweise auch die Startknotenkosten STK_KOST geladen. Befindet sich in dem Ziellandkartenausschnitt eine der Landkartenmarkierungen so müssen nun lediglich die Kosten von dem Zielort ZIO zu der entsprechenden Ziellandkartenmarkierung LM_ZI ermittelt werden. Befindet sich beispielsweise keine der Landkartenmarkierungen in dem Ziellandkartenausschnitt, so kann abhängig von dem Zielort ZIO des Ziellandkartenausschnitts der Zielknoten ZIK ermittelt werden, der auf dem Rand des Ziellandkartenausschnitts liegt. Abhängig von dem Zielknoten ZIK kann dann die Ziellandkartenmarkierung LM_ZI ausgewählt werden. Die Landkartenausschnitte PARC, die die Start- bzw. Ziellandkartenmarkierungen LM_ST, LM_ZI umfassen, müssen nicht unbedingt geladen werden, da deren Landkartenmarkierungskosten LM_KOST in der Tabelle der Landkartenmarkierungskosten LM_KOST hinterlegt sind.

Das Ermitteln der Mindestkosten MIN_KOST kann weiterhin beschleunigt werden, indem der Landkartenausschnitt PARC, der den ausgezeichneten Start- bzw. Zielort umfasst, mit Zusatzinformationen ausgestattet wird, die über die Informationen hinausgehen, die den Landkartenausschnitten PARC zugeordnet sind, die keinen ausgezeichneten Start- bzw. Zielort umfassen. Die Zusatzinformationen können beispielsweise zusätzliche Landkartenmarkierungen, wie die ausgezeichnete Landkartenmarkierung HOME, den ausgezeichneten Start- bzw. Zielort selbst, zusätzliche Knoten KN auf dem Rand des entsprechenden Landkartenausschnitts PARC mit entsprechenden Knotenkosten und/oder weitere Zusatzinformationen umfassen.

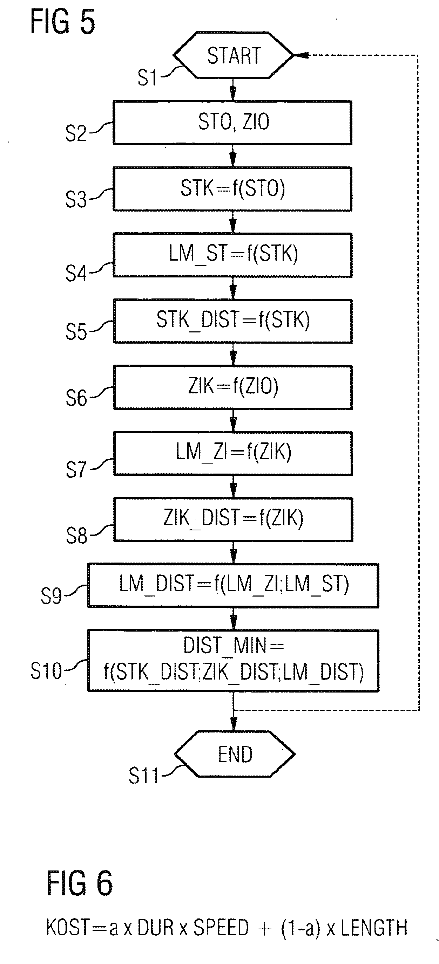

Ein Programm (Figur 5) zum Ermitteln der Mindestkosten MIN_KOST ist vorzugsweise auf dem Speichermedium des Geräts zum Ermitteln der Route gespeichert. Das Gerät kann beispielsweise ein PC, ein Laptop, ein Pocket-Computer, ein Routenplanungssystem und/oder ein Navigationssystem sein. Das Gerät kann auch als Vorrichtung zum Ermitteln der Mindestkosten zwischen dem Startort STO und dem Zielort ZIO für die Planung der Route von dem Startort STO zu dem Zielort ZIO bezeichnet werden. Das Programm wird vorzugsweise bei einer Suchanfrage des Benutzers des Geräts nach der Route von dem Startort STO zu dem Zielort ZIO in einem Schritt S1 gestartet. In dem Schritt S1 werden gegebenenfalls Variablen initialisiert.

In einem Schritt S2 werden die beim Stellen der Anfrage nach der Route von dem Benutzer eingegebenen und gespeicherten Orte ausgelesen.

In einem Schritt S3 wird abhängig von dem Startort STO der Startknoten STK ermittelt. Vorzugsweise ist der Startknoten STK der Knoten KN der dem Startort STO am nächsten liegt.

In einem Schritt S4 werden abhängig von dem Startknoten STK die Startlandkartenmarkierungen LM_ST ermittelt. Die Startlandkartenmarkierungen LM_ST sind eine vorgegebene erste Anzahl an Startlandkartenmarkierungen LM_ST, die dem Startknoten STK am nächsten liegen. Die Startknotenkosten STK_DIST von dem Startknoten STK zu den Startlandkartenmarkierungen LM_ST sind dem Startknoten STK zugeordnet, und insbesondere vorzugsweise zusammenhängend mit dem Startknoten STK abgespeichert. Die vorgegebene erste Anzahl nächstliegender Startlandkartenmarkierungen LM_ST kann beispielsweise 10 sein, sie kann aber auch einen vorgegeben prozentualen Anteil aller Landkartenmarkierungen repräsentieren, beispielsweise ein bis zehn Prozent.

In einem Schritt S5 werden abhängig von dem Startknoten STK und den entsprechenden Startlandkartenmarkierungen LM_ST die Startknotenkosten STK_DIST ermittelt. Sind die Startknotenkosten STK_DIST zusammen mit den Startknoten STK abgespeichert, so wird keine zusätzliche Bearbeitungszeit zum Ermitteln der Startknotenkosten STK_DIST benötigt.

In einem Schritt S6 wird abhängig von dem Zielort ZIO der Zielknoten ZIK ermittelt. Der Zielknoten ZIK ist vorzugsweise der Knoten KN, der dem Zielort ZIO am nächsten liegt.

In einem Schritt S7 werden abhängig von dem Zielknoten ZIK die Ziellandkartenmarkierungen LM_ZI ermittelt entsprechend den Startlandkartenmarkierungen LM_ST in dem Schritt S4.

In einem Schritt S8 werden die Zielknotenkosten ZIK_KOST ermittelt entsprechend den Startknotenkosten STK_KOST in dem Schritt S5.

In einem Schritt S9 werden anhand der Tabelle der Landkartenmarkierungskosten LM_KOST die entsprechenden Landkartenmarkierungskosten LM_KOST ermittelt abhängig von den Ziellandkartenmarkierungen LM_ZI und den Startlandkartenmarkierungen LM_ST.

In einem Schritt S10 werden die Mindestkosten MIN_KOST abhängig von den Startknotenkosten STK_KOST, den Zielknotenkosten ZIK_KOST und den entsprechenden Landkartenmarkierungskosten LM_KOST ermittelt. Bevorzugt werden die Mindestkosten MIN_KOST ermittelt durch Differenzbildung, bei der die Startknotenkosten STK_KOST und die Zielknotenkosten ZIK_KOST von den entsprechenden Landkartenmarkierungskosten LM_KOST abgezogen werden, für alle Paare von ermittelten Startlandkartenmarkierungen LM_ST und ermittelten Ziellandkartenmarkierungen LM_ZI und durch anschließendes Ermitteln des Paares von ermittelten Startlandkartenmarkierungen LM_ST und ermittelten Ziellandkartenmarkierungen LM_ZI, dessen Differenz der Kosten am größten ist. Vorzugsweise ist dann die größte Differenz der Kosten des ermittelten Paares repräsentativ für die Mindestkosten MIN_KOST.

Das Programm kann in einem Schritt S11 beendet werden. Bevorzugt wird das Programm jedoch erneut gestartet. Falls sich das Gerät zum Planen der Route während dem Durchfahren der Route bis zu dem erneuten Starten des Programms zu einem anderen Knoten KN bewegt hat als bei dem ersten Starten des Programms, so kann dieser Knoten KN bevorzugt als neuer Startort STO und/oder als neuer Startknoten STK zum Ermitteln von neuen Mindestkosten MIN_KOST herangezogen werden.

In Zusammenhang mit den räumlichen und zeitlichen Kosten ist es besonders vorteilhaft, wenn bei der Routenplanung nicht nur entweder die räumlichen, die zeitlichen Kosten oder die weiteren Kosten berücksichtigt werden, sondern alle gleichzeitig. Dazu ist es besonders vorteilhaft, wenn der Benutzer selbst gewichten kann, wie wichtig ihm eine Optimierung der Route beispielsweise bezüglich der Fahrdauer DUR, der zurückzulegenden Streckenlänge LENGTH und/oder Mautgebühren ist. Beispielsweise können gewichtete Kosten KOST (Figur 6) als Funktion der Fahrdauer DUR, einer durchschnittlich möglichen Geschwindigkeit SPEED des Kraftfahrzeugs, der Streckenlänge LENGTH und eines Gewichtungsfaktors a ermittelt werden, vorzugsweise nach der in Figur 6 angegebenen Berechnungsvorschrift. Der Gewichtungsfaktor a ist vorzugsweise eine prozentuale Größe. Als Daten werden jeweils nur die hundertprozentigen Werte an den entsprechend Knoten KN abgespeichert und die individuelle Gewichtung erfolgt abhängig von einem Benutzerwunsch des Benutzers in Echtzeit während dem Ermitteln der Route, insbesondere während dem Ermitteln der Mindestkosten MIN_KOST. Somit können nahezu unendlich viele Kombinationen unterschiedlicher Gewichtungsmöglichkeiten bereitgestellt werden, obwohl lediglich eine stark begrenzte abzuspeichernde Datenmenge dazu verwendet wird.

Die Erfindung ist nicht auf die angegebenen Ausführungsbeispiele beschränkt. Beispielsweise können die unterschiedlichen Ausführungsbeispiele miteinander kombiniert werden. Beispielsweise kann ein Landkartenausschnitt PARC, der den ausgezeichneten Start- bzw. Zielort umfasst, mit der ausgezeichneten Landkartenmarkierung HOME und/oder weiteren zusätzlichen Landkartenmarkierungen und/oder mit mehr Knoten KN die die Kosten zu den nächstliegenden Landkartenmarkierungen umfassen, auf dem Rand des entsprechenden Landkartenausschnitts PARC versehen werden. Ferner können mehrere Landkartenausschnitte PARC mit den zusätzlichen Informationen versehen werden, insbesondere können mehrere ausgezeichnete Landkartenmarkierungen HOME gesetzt werden.

## Patentansprüche

1. Verfahren zum Ermitteln von Mindestkosten (MIN_KOST) von einem Startort (STO) zu einem Zielort (ZIO) anhand einer vorgegebenen Landkarte (MAP), die in vorgegebene Landkartenausschnitte (PARC) unterteilt ist, für eine Planung einer Route von dem Startort (STO) zu dem Zielort (ZIO), bei dem
- abhängig von dem Startort (STO) ein Startknoten (STK) ermittelt wird, der einen Übergang von einem der vorgegebenen Landkartenausschnitte (PARC) der Landkarte (MAP) zu einem anderen der vorgegebenen Landkartenausschnitte (PARC) der Landkarte (MAP) repräsentiert und dem zumindest Startknotenkosten (STK_KOST) von dem Startknoten (STK) bis zu zumindest einer vorgegebenen Startlandkartenmarkierung (LM_ST) aus einer vorgegebenen Menge an Startlandkartenmarkierungen (LM_ST) zugeordnet sind, wobei die Menge an Startlandkartenmarkierungen (LM_ST) eine vorgegebene erste Anzahl der zu dem Startknoten (STK) nächstliegenden Landkartenmarkierungen umfasst und wobei die vorgegebene erste Anzahl kleiner ist als die Gesamtanzahl aller Landkartenmarkierungen,
- abhängig von dem Startknoten (STK) die entsprechenden Startknotenkosten (STK_KOST) zu jeder Startlandkartenmarkierung (LM_ST) ermittelt werden,
- abhängig von dem Zielort (ZIO) ein Zielknoten (ZIK) ermittelt wird, der einen Übergang von einem der vorgegebenen Landkartenausschnitte (PARC) der Landkarte (MAP) zu einem anderen der vorgegebenen Landkartenausschnitte (PARC) der Landkarte (MAP) repräsentiert und dem zumindest Zielknotenkosten (ZIK_KOST) von dem Zielknoten (ZIK) bis zu zumindest einer vorgegebenen Ziellandkartenmarkierung (LM_ZI) aus einer vorgegebenen Menge an Ziellandkartenmarkierungen (LM_ZI) zugeordnet sind, wobei die Menge an Ziellandkartenmarkierungen (LM_ZI) eine vorgegebene zweite Anzahl der zu dem Zielknoten (ZIK) nächstliegenden Landkartenmarkierungen umfasst und wobei die vorgegebene zweite Anzahl kleiner ist als die Gesamtanzahl aller Landkartenmarkierungen,
- abhängig von dem Zielknoten (ZIK) die Zielknotenkosten (ZIK_KOST) zu jeder Ziellandkartenmarkierung (LM_ZI) ermittelt werden,
- Landkartenmarkierungskosten (LM_KOST) von jeder Startlandkartenmarkierung (LM_ST) zu jeder Ziellandkartenmarkierung (LM_ZI) ermittelt werden anhand einer Tabelle, die die Landkartenmarkierungskosten (LM_KOST) aller Landkartenmarkierungen zueinander umfasst,
- die Mindestkosten (MIN_KOST) abhängig von den ermittelten Startknotenkosten (STK_KOST), den ermittelten Zielknotenkosten (ZIK_KOST) und den ermittelten Landkartenmarkierungskosten (LM_KOST) ermittelt werden.

2. Verfahren nach Anspruch 1, bei dem die Mindestkosten (MIN_KOST) anhand einer vorgegebenen Landkarte (MAP) ermittelt werden, die in vorgegebene Landkartenausschnitte (PARC) unterteilt ist, und bei dem für einen der Landkartenausschnitte (PARC), der einen vorgegebenen Startort (STO) und/oder Zielort (ZIO) umfasst, zumindest eine Zusatzinformation vorgegeben wird gegenüber einem der Landkartenausschnitte (PARC) der keinen vorgegebenen Startort (STO) bzw. Zielort (ZIO) umfasst.

3. Verfahren nach Anspruch 2, bei dem als Zusatzinformation zumindest eine zusätzliche Landkartenmarkierung vorgegeben wird.

4. Verfahren nach Anspruch 3, bei dem als Zusatzinformation eine der Landkartenmarkierungen so vorgegeben wird, dass sie dem vorgegebenen Startort (STO) und/oder Zielort (ZIO) entspricht.

5. Verfahren nach einem der vorstehenden Ansprüche, bei dem räumliche und/oder zeitliche Kosten der Knoten (KN) zu den Landkartenmarkierungen und/oder der Landkartenmarkierungen zueinander vorgegeben werden, wobei die räumlichen Kosten räumliche Abstände zwischen den Knoten (KN) und den Landkartenmarkierungen bzw. zwischen den Landkartenmarkierungen zueinander repräsentieren und wobei die zeitlichen Kosten eine durchschnittlichen Fahrdauer (DUR) von einem der Knoten (KN) zu einer der Landkartenmarkierungen bzw. von einer der Landkartenmarkierungen zu einer anderen der Landkartenmarkierungen repräsentieren.

6. Verfahren nach Anspruch 5, bei dem
- abhängig von einem Benutzerwunsch die zeitlichen und räumlichen Kosten gewichtet werden,
- die Route und/oder die Mindestkosten (MIN_KOST) abhängig von den gewichteten Kosten ermittelt werden.

7. Vorrichtung zum Ermitteln von Mindestkosten (MIN_KOST) von einem Startort (STO) zu einem Zielort (ZIO) anhand einer vorgegebenen Landkarte (MAF), die in vorgegebene Landkartenausschnitte (PARC) unterteilt ist, für eine Planung einer Route von dem Startort (STO) zu dem Zielort (ZIO), wobei die Vorrichtung ausgebildet ist zum
- Ermitteln eines Startknotens (STK), der einen Übergang von einem der vorgegebenen Landkartenausschnitte (PARC) der Landkarte (MAP) zu einem anderen der vorgegebenen Landkartenausschnitte (PARC) der Landkarte (MAP) repräsentiert und dem zumindest Startknotenkosten (STK_KOST) von dem Startknoten (STK) bis zu zumindest einer vorgegebenen Startlandkartenmarkierung (LM_ST) aus einer vorgegebenen Menge an Startlandkartenmarkierungen (LM_ST) zugeordnet sind, abhängig von dem Startort (STO), wobei die Menge an Startlandkartenmarkierungen (LM_ST) eine vorgegebene erste Anzahl der zu dem Startknoten (STK) nächstliegenden Landkartenmarkierungen umfasst und wobei die vorgegebene erste Anzahl kleiner ist als die Gesamtanzahl aller Landkartenmarkierungen,
- Ermitteln der entsprechenden Startknotenkosten (STK_KOST) zu jeder Startlandkartenmarkierung (LM_ST) abhängig von dem Startknoten (STK),
- Ermitteln eines Zielknotens (ZIK), der einen Übergang von einem der vorgegebenen Landkartenausschnitte (PARC) der Landkarte (MAP) zu einem anderen der vorgegebenen Landkartenausschnitte (PARC) der Landkarte (MAP) repräsentiert und dem zumindest Zielknotenkosten (ZIK_KOST) von dem Zielknoten (ZIK) bis zu zumindest einer vorgegebenen Ziellandkartenmarkierung (LM_ZI) aus einer vorgegebenen Menge an Ziellandkartenmarkierungen (LM_ZI) zugeordnet sind, abhängig von dem Zielort (ZIO), wobei die Menge an Ziellandkartenmarkierungen (LM_ZI) die vorgegebene zweite Anzahl der zu dem Zielknoten (ZIK) nächstliegenden Landkartenmarkierungen umfasst und wobei die vorgegebene zweite Anzahl kleiner ist als die Gesamtanzahl aller Landkartenmarkierungen,,
- Ermitteln der Zielknotenkosten (ZIK_KOST) zu jeder Ziellandkartenmarkierung (LM_ZI) abhängig von dem Zielknoten (ZIK),
- Ermitteln von Landkartenmarkierungskosten (LM_KOST) von jeder Startlandkartenmarkierung (LM_ST) zu jeder Ziellandkartenmarkierung (LM_ZI) anhand einer Tabelle, die die Landkartenmarkierungskosten (LM_KOST) aller Landkartenmarkierungen zueinander umfasst,
- Ermitteln der Mindestkosten (MIN_KOST) abhängig von den ermittelten Startknotenkosten (STK_KOST), den ermittelten Zielknotenkosten (ZIK_KOST) und den ermittelten Landkartenmarkierungskosten (LM_KOST).

## Claims

1. Method for ascertaining minimum costs (MIN_KOST) from a starting location (STO) to a destination (ZIO) using a prescribed map (MAP), which is divided into prescribed map details (PARC), for the purpose of planning a route from the starting location (STO) to the destination (ZIO), in which
- the starting location (STO) is taken as a basis for ascertaining a starting node (STK) which represents a gateway from one of the prescribed map details (PARC) from the map (MAP) to another of the prescribed map details (PARC) from the map (MAP) and which has at least starting node costs (STK_KOST) from the starting node (STK) to at least one prescribed starting map marker (LM_ST) from a prescribed set of starting map makers (LM_ST) associated with it, wherein the set of starting map markers (LM_ST) comprises a prescribed first number of map markers which are closest to the starting node (STK) and wherein the prescribed first number is smaller than the total number of all the map markers,
- the starting node (STK) is taken as a basis for ascertaining the corresponding starting node costs (STK-KOST) to each starting map marker (LM_ST),
- the destination (ZIO) is taken as a basis for ascertaining a destination node (ZIK) which represents a gateway from one of the prescribed map details (PARC) from the map (MAP) to another of the prescribed map details (PARC) from the map (MAP) and which has at least destination node costs (ZIK_KOST) from the destination node (ZIK) to at least one prescribed destination map marker (LM_ZI) from a prescribed set of destination map markers (LM_ZI) associated with it, wherein the set of destination map makers (LM_ZI) comprises a prescribed second number of map markers which are closest to the destination node (ZIK) and wherein the prescribed second number is smaller than the total number of all the map markers,
- the destination node (ZIK) is taken as a basis for ascertaining the destination node costs (ZIK_KOST) to each destination map marker (LM_ZI),
- map marker costs (LM_KOST) from each starting map maker (LM_ST) to each destination map marker (LM_ZI) are ascertained using a table which comprises the map marker costs (LM_KOST) for all the map markers relative to one another,
- the minimum costs (MIN_KOST) are ascertained on the basis of the ascertained starting node costs (STK_KOST), the ascertained destination node costs (ZIK_KOST) and the ascertained map maker costs (LM_KOST).

2. Method according to Claim 1, in which the minimum costs (MIN_KOST) are ascertained using a prescribed map (MAP) which is divided into prescribed map details (PARC), and in which one of the map details (PARC), which comprises a prescribed starting location (STO) and/or a destination (ZIO), has at least one piece of supplementary information prescribed for it, in comparison with one of the map details (PARC) which does not comprise a prescribed starting location (STO) or destination (ZIO).

3. Method according to Claim 2, in which the piece of supplementary information prescribed is at least one additional map marker.

4. Method according to Claim 3, in which, as the piece of supplementary information, one of the map markers is prescribed such that it corresponds to the prescribed starting location (STO) and/or destination (ZIO).

5. Method according to one of the preceding claims, in which spatial and/or temporal costs from the nodes (KN) to the map markers and/or from the map markers to one another are prescribed, wherein the spatial costs represent physical distances between the nodes (KN) and the map markers or between the map markers themselves and wherein the temporal costs represent an average journey time (DUR) from one of the nodes (KN) to one of the map markers or from one of the map markers to another of the map markers.

6. Method according to Claim 5, in which
- a user requirement is taken as a basis for weighting the temporal and spatial costs,
- the route and/or the minimum costs (MIN_KOST) are ascertained on the basis of the weighted costs.

7. Apparatus for ascertaining minimum costs (MIN_KOST) from a starting location (STO) to a destination (ZIO) using a prescribed map (MAP), which is divided into prescribed map details (PARC), for the purpose of planning a route from the starting location (STO) to the destination (ZIO), wherein the apparatus is designed to
- ascertain a starting node (STK), which represents a gateway from one of the prescribed map details (PARC) from the map (MAP) to another of the prescribed map details (PARC) from the map (MAP) and which has at least starting node costs (STK_KOST) from the starting node (STK) to at least one prescribed starting map marker (LM_ST) from a prescribed set of starting map markers (LM_ST) associated with it, on the basis of the starting location (STO), wherein the set of starting map markers (LM_ST) comprises a prescribed first number of map markers which are closest to the starting node (STK) and wherein the prescribed first number is smaller than the total number of all the map markers,
- ascertain the corresponding starting node costs (STK_KOST) to each starting map marker (LM_ST) on the basis of the starting node (STK),
- ascertain a destination node (ZIK), which represents a gateway from one of the prescribed map details (PARC) from the map (MAP) to another of the prescribed map details (PARC) from the map (MAP) and which has at least destination node costs (ZIK_KOST) from the destination node (ZIK) to at least one prescribed destination map marker (LM_ZI) from a prescribed set of destination map markers (LM_ZI) associated with it, on the basis of the destination (ZIO), wherein the set of destination map markers (LM_ZI) comprises the prescribed second number of map markers which are closest to the destination node (ZIK) and wherein the prescribed second number is smaller than the total number of all the map markers,
- ascertain the destination node costs (ZIK_KOST) to each destination map marker (LM_ZI) on the basis of the destination node (ZIK),
- ascertain map marker costs (LM_KOST) from each starting map marker (LM_ST) to each destination map marker (LM_ZI) using a table which comprises the map marker costs (LM_KOST) for all the map markers relative to one another,
- ascertain the minimum costs (MIN_KOST) on the basis of the ascertained starting node costs (STK_KOST), the ascertained destination node costs (ZIK_KOST) and the ascertained map marker costs (LM_KOST).

## Revendications

1. Procédé permettant de déterminer, à l'aide d'une carte géographique (MAP) donnée, laquelle est divisée en secteurs donnés (PARC) de carte géographique, les coûts minimum (MIN_KOST) entre un lieu de départ (STO) et un lieu de destination (ZIO), et ceci dans le cadre d'une planification d'un itinéraire entre le lieu de départ (STO) et le lieu de destination (ZIO), procédé au cours duquel
- en fonction du lieu de départ (STO), on détermine un noeud de départ (STK) qui représente un point de transit entre l'un des secteurs donnés (PARC) de la carte géographique (MAP) et un autre secteur donné (PARC) de la carte géographique (MAP) et auquel correspondent au moins des coûts inhérents au noeud de départ (STK_KOST) entre le noeud de départ (STK) et au moins un point de repère de départ donné (LM_ST) sur la carte géographique tiré d'un ensemble donné de points de repère de départ (LM_ST) sur la carte géographique, où l'ensemble de points de repère de départ (LM_ST) sur la carte géographique comprend un premier nombre donné des points de repère sur la carte géographique les plus proches du noeud de départ (STK) et où le premier nombre donné est inférieur au nombre total des points de repère sur la carte géographique,
- en fonction du noeud de départ (STK), on détermine les coûts correspondants (STK_KOST) inhérents au noeud de départ pour chaque point de repère de départ (LM_ST) sur la carte géographique,
- en fonction du lieu de destination (ZIO), on détermine un noeud de destination (ZIK) qui représente un point de transit entre l'un des secteurs donnés (PARC) de la carte géographique (MAP) et un autre secteur donné (PARC) de la carte géographique (MAP) et auquel correspondent au moins des coûts inhérents au noeud de destination (ZIK_KOST) entre le noeud de destination (ZIK) et au moins un point de repère de destination donné (LM_ZI) sur la carte géographique tiré d'un ensemble donné de points de repère de destination (LM_ZI) sur la carte géographique, où l'ensemble de points de repère de destination (LM_ZI) sur la carte géographique comprend un deuxième nombre donné des points de repère sur la carte géographique les plus proches du noeud de destination (ZIK) et où le deuxième nombre donné est inférieur au nombre total des points de repère sur la carte géographique,
- en fonction du noeud de destination (ZIK), on détermine les coûts correspondants inhérents au noeud de destination (ZIK_KOST) pour chaque point de repère de destination (LM_ZI) sur la carte géographique,
- on détermine des coûts (LM_KOST) inhérents au point de repère sur la carte géographique entre chaque point de repère de départ (LM_ST) sur la carte géographique et chaque point de repère de destination (LM_ZI) sur la carte géographique à l'aide d'un tableau qui comprend les coûts (LM_KOST) inhérents aux points de repère sur la carte géographique pour tous les points de repère sur la carte géographique les uns par rapport aux autres,
- on détermine les coûts minimum (MIN_KOST) en fonction des coûts inhérents au noeud de départ (STK_KOST), qui ont été déterminés, des coûts inhérents au noeud de destination (ZIK_KOST), qui ont été déterminés, et des coûts (LM_KOST) inhérents aux points de repère sur la carte géographique, qui ont été déterminés.

2. Procédé selon la revendication 1, au cours duquel on détermine, à l'aide d'une carte géographique (MAP) donnée, laquelle est divisée en secteurs donnés (PARC) de carte géographique, les coûts minimum (MIN_KOST), et au cours duquel on prescrit, pour l'un des secteurs donnés (PARC) de la carte géographique, qui comprend un lieu de départ donné (STO) et/ou un lieu de destination donné (ZIO), au moins une information complémentaire par rapport à l'un des secteurs (PARC) de la carte géographique, qui ne comprend pas de lieu de départ donné (STO) et/ou de lieu de destination donné (ZIO).

3. Procédé selon la revendication 2, au cours duquel, en tant qu'information complémentaire, on prescrit au moins un point de repère supplémentaire sur la carte géographique.

4. Procédé selon la revendication 3, au cours duquel, en tant qu'information complémentaire, on prescrit l'un des points de repère sur la carte géographique de manière telle qu'il corresponde au lieu de départ donné (STO) et/ou au lieu de destination donné (ZIO).

5. Procédé selon l'une des revendications précédentes, au cours duquel on prescrit des coûts dans l'espace et/ou des coûts dans le temps inhérents aux noeuds (KN) par rapport aux points de repère sur la carte géographique et/ou des points de repère sur la carte géographique les uns par rapport aux autres, où les coûts dans l'espace représentent des distances dans l'espace entre les noeuds (KN) et les points de repère sur la carte géographique et, respectivement, entre les points de repère sur la carte géographique les uns par rapport aux autres et où les coûts dans le temps représentent une durée moyenne de trajet (DUR) entre l'un des noeuds (KN) et l'un des points de repère sur la carte géographique et, respectivement, entre l'un des points de repère sur la carte géographique et un autre point de repère sur la carte géographique.

6. Procédé selon la revendication 5, au cours duquel
- en fonction d'un desiderata de l'utilisateur, on pondère les coûts dans l'espace et les coûts dans le temps,
- en fonction des coûts pondérés, on détermine l'itinéraire et/ou les coûts minimum (MIN_KOST).

7. Dispositif permettant de déterminer, à l'aide d'une carte géographique (MAP) donnée, laquelle est divisée en secteurs donnés (PARC) de carte géographique, les coûts minimum (MIN_KOST) entre un lieu de départ (STO) et un lieu de destination (ZIO), et ceci dans le cadre d'une planification d'un itinéraire entre le lieu de départ (STO) et le lieu de destination (ZIO), où le dispositif est conçu pour
- déterminer, en fonction du lieu de départ (STO), un noeud de départ (STK) qui représente un point de transit entre l'un des secteurs donnés (PARC) de la carte géographique (MAP) et un autre secteur donné (PARC) de la carte géographique (MAP) et auquel correspondent au moins des coûts inhérents au noeud de départ (STK_KOST) entre le noeud de départ (STK) et au moins un point de repère de départ donné (LM_ST) sur la carte géographique tiré d'un ensemble donné de points de repère de départ (LM_ST) sur la carte géographique, où l'ensemble de points de repère de départ (LM_ST) sur la carte géographique comprend un premier nombre donné des points de repère sur la carte géographique les plus proches du noeud de départ (STK) et où le premier nombre donné est inférieur au nombre total des points de repère sur la carte géographique,
- déterminer, en fonction du noeud de départ (STK), les coûts correspondants (STK_KOST) inhérents au noeud de départ pour chaque point de repère de départ (LM_ST) sur la carte géographique,
- déterminer, en fonction du lieu de destination (ZIO), un noeud de destination (ZIK) qui représente un point de transit entre l'un des secteurs donnés (PARC) de la carte géographique (MAP) et un autre secteur donné (PARC) de la carte géographique (MAP) et auquel correspondent au moins des coûts inhérents au noeud de destination (ZIK_KOST) entre le noeud de destination (ZIK) et au moins un point de repère de destination donné (LM_ZI) sur la carte géographique tiré d'un ensemble donné de points de repère de destination (LM_ZI) sur la carte géographique, où l'ensemble des points de repère de destination (LM_ZI) sur la carte géographique comprend un deuxième nombre donné des points de repère sur la carte géographique les plus proches du noeud de destination (ZIK) et où le deuxième nombre donné est inférieur au nombre total de points de repère sur la carte géographique,
- déterminer, en fonction du noeud de destination (ZIK), les coûts correspondants inhérents au noeud de destination (ZIK_KOST) pour chaque point de repère de destination (LM_ZI) sur la carte géographique,
- déterminer des coûts (LM_KOST) inhérents au point de repère sur la carte géographique entre chaque point de repère de départ (LM_ST) sur la carte géographique et chaque point de repère de destination (LM_ZI) sur la carte géographique à l'aide d'un tableau qui comprend les coûts (LM_KOST) inhérents aux points de repère sur la carte géographique pour tous les points de repère sur la carte géographique les uns par rapport aux autres,
- déterminer les coûts minimum (MIN_KOST) en fonction des coûts inhérents au noeud de départ (STK_KOST), qui ont été déterminés, des coûts inhérents au noeud de destination (ZIK_KOST), qui ont été déterminés, et des coûts (LM_KOST) inhérents aux points de repère sur la carte géographique, qui ont été déterminés.
